# EUROPEAN PATENT APPLICATION

(11) **EP 1 594 288 A1**
(43) Date of publication of application: **09.11.2005**
(21) Application number: 04405284.3
(22) Date of filing: 05.05.2004
(51) Int. Cl.: H04L 29/12

(54) **Method and computer program for registering entries in a domain name system type database**

(71) Applicant: Internet Management Systems, Inc., Woodland Hills, CA 91367 (US)
(72) Inventor: Fearing, Roger N., Woodland Hills, CA 91367 (US); Leutenegger, Ives, 8400 Winterthur (CH)
(74) Representative: Frei Patent Attorneys

(57) **Abstract**

A method for registering entries in a DNS (Domain Name System) type database, comprises the steps (21) of
- providing a registration identifier (1), said registration identifier (1) being a string of characters;
- automatically determining a first domain name identifier, said first domain name identifier being a character string comprising at least a first substring that is algorithmically derived from at least a substring of the registration identifier (1);
- automatically determining a second domain name identifier, said second domain name identifier being a character string comprising at least a second substring that is algorithmically derivable from at least a substring of the registration identifier (1) or from at least a substring of the first domain name identifier; and
- registering (2, 3), in the DNS type database, domain names according to the first domain name identifier and to the second domain name identifier.

## Description

### FIELD OF THE INVENTION

The invention relates to the field of communications networks, and in particular to a method and computer program for registering entries in a DNS (Domain Name System) type database, and a method and computer program for accessing a target entity over a communications network as described in the preamble of the corresponding independent claims.

### BACKGROUND OF THE INVENTION

Presently, users of most communication applications such as telephone, electronic mail (email) or internet websites are required to input a predetermined address string into a communication application in order to establish the desired communication with the intended recipients. For example, the user of an email application must input an address string in the form of a predetermined email address such as johndoe@address. com in order to send an email message to the recipient.

An address string is generally presumed to be a sequence of components having alpha-numeric or other human and/or machine recognizable characters. Such address sequences can generally be of any length or component type but their exact configurations are typically predetermined by the service provider of the communication application.

For example in the case of telephone, the address string used is the telephone number whose length and digit sequence are often set by the telephone service provider.

Likewise, in the case of an internet website, a predetermined Uniform Resource Locator (URL) is typically used by an internet user to access a desired website.

The use of some address strings, such as telephone numbers, to establish communication with another location across a communication medium has been well known in the art. But recent technological advances, especially in the computer networking and telecommunication fields have resulted in the introduction of numerous new and/or different forms of communication. For example, communication by use of electronic mail, World Wide Web sites, or other communication application such as facsimile are amongst such previously unavailable alternatives to a telephone call.

The increase in the number of ways to communicate, however, has resulted in an undesirable corresponding increase in both the number and types of address strings associated with each such form of communication.

Furthermore, the underlying technologies used to implement such diverse communication applications typically require a user to input an address string that is largely unique to that technology in order to operate and derive the desired benefit from the communication application. Even the communication applications of the same type but with different formats, such as an email application by two different email service providers, often require the use of different address strings. For example an individual having email accounts with two or more email service providers is a single recipient entity who will nonetheless have two or more associated email addresses, usually in the form of one email address for each service provider.

One problem with the existing approach of assigning one address string per user per communication application is the generation of multiple address strings for a single recipient. For example, in trying to establish communication with a hypothetical recipient John Doe having email, world wide web site and a telephone, an end-user must often know and correctly remember the distinct address strings associated with each such application in order to establish communication with John Doe using that application. The user would thus have to correctly input for example, johndoe@address. com to send Doe an email, input an often lengthy and difficult to remember URL string such as http://www.address.com/johndoe to access Doe's website and input a phone number into a phone system in order to establish telephone communication with Doe.

The requirements for an end-user to know and correctly remember the separate address strings is further exacerbated by the prior art's use of Domain Names as website addresses. A Domain Name, such as www. uspto.gov, is a form of an address string that is generally designed to include human recognizable characters and/or numbers in order to aid the user with the finding and/or recollection of the correct address string. Once inputted into the communication application, a system Domain Name Server (DNS) converts the Domain Name into a standard numeric Internet Protocol (IP) Address such as 255.100.1.0 for internal network use.

In order to provide addresses related to different communication applications associated with one user, and in order to support redirection services, the Internet Engineering Task Force (IETF) has defined the ENUM standard, documented e.g. in RFC2916. ENUM allows a recipient to choose one ore more of his/her assigned E.164 phone numbers to act as a "trigger" to point to any other service used. These pointers may be retrieved globally, based only on the knowledge of a number according to the E.164 number standard. This standard E.164, established by the ITU-T (International Telecommunications Union - Telecommunications Standardization Sector) defines the format of global switched telephone numbers. A 16 digit or shorter number is split into international, national and user number portions.

ENUM allows an end user to type a telephone number into a client application such as a Web browser, e-mail client, VoIP (Voice over IP) application etc. The client application accesses resource records comprising a listing of Internet resources (often in the form of an URI) for that number established according to the ENUM standard. The list comprises addresses for IP telephony, e-mail, Web sites, fixed and mobile phone numbers etc. The client application selects a communication service according to priorities and/or order numbers specified in the resource records.

An important issue regarding ENUM is that it may become a tool of marketers, spammers, and individuals who wish to harass others. The ENUM database and its resource records are public and can be searched by anyone. It is likely that marketers, spammers, and malicious actors will mine the database for personal contact information. Since there are no statutory protections in place regulating the use of ENUM URI based contact information, marketers and spammers may use the contact information for junk mail, unsolicited commercial e-mail, and other forms of commercial solicitations. The system could facilitate an unprecedented amount of spam because programs could be designed to send solicitations to all of the registrant's communications devices.

For similar reasons, but without necessarily using a database comprising a list of associated services, as in ENUM, the application WO 00/74334, whose content is herewith incorporated by reference in its entirety, discloses methods for providing addressing string formats and associated system implementations that minimize the number of different addressing strings used for communicating across different communication applications. The systems and methods receive a valid address string that can be inputted into a communication application selected from a collection of communication applications wherein the same address string can be inputted for any selected communication application from that collection.

### DESCRIPTION OF THE INVENTION

It is an object of the invention to increase the versatility of addressing schemes used for a plurality of communication applications associated with a common user or endpoint.

It is an object of the invention to increase the versatility of redirection schemes among communication applications associated with a common user or endpoint.

These objects are achieved by a method and computer program for registering entries in a DNS (Domain Name System) type database, and a method and computer program for accessing a target entity over a communications network according to the corresponding independent claims.

The method for registering entries in a DNS (Domain Name System) type database, comprises the steps of
- providing a registration identifier, said registration identifier being a string of characters;
- automatically determining a first domain name identifier, said first domain name identifier being a character string comprising at least a first substring that is algorithmically derived from at least a substring of the registration identifier;
- automatically determining a second domain name identifier, said second domain name identifier being a character string comprising at least a second substring that is algorithmically derivable from at least a substring of the registration identifier or from at least a substring of the first domain name identifier; and
- registering, in the DNS type database, domain names according to the first domain name identifier and to the second domain name identifier.

In a preferred variant of the invention, more than two domain names that are algorithmically determined from a given registration identifier or from each other are generated and registered.

In both variants, as a result a structure of database entries can be established which returns essentially the same information, regardless of which variant - from a predetermined limited set of formatting variants ― of a domain name is used in querying the database.

In a preferred variant of the invention, at least one of the steps of algorithmically deriving one substring from another results in an identical substring. Furthermore, a substring of a given string may also be the complete given string itself. This implies for instance that the registration identifier may be one of the resulting domain names itself.

In general, however "algorithmically deriving", or " algorithmically determining" means applying a predetermined algorithm to a given input string and generating at least one output string that is unambiguously determined by the input string. The input string may be a substring of another string, and/or may be determined from another string by some kind of preprocessing. Alternatively, such a preprocessing may be considered to be part of the algorithm itself. The algorithm typically can be expressed in the form of a computer program.

In a preferred embodiment of the invention, the algorithm may implement a database or table lookup. In this case, a database stores, for each of a plurality of users, a list of two or more address strings. Thus, applying the algorithm for deriving one or more further strings from the input (address) string comprises automatically retrieving, given one specific address string as an input, the other address string or strings associated with the same user.

A given pair of strings may have been generated by other means than by the application of such a computer program, e.g. manually. Nevertheless, applying the algorithm to a first one of the two strings would result in the second one of the two strings, and so the second string is said to be algorithmically derivable from the first string.

In a further preferred variant of the invention, the invention provides for the validation of domain names that are potential entries into the DNS type database. In this case, the step of automatically determining the first domain name identifier comprises considering the first domain name identifier to be identical to the registration identifier, and the step of automatically determining the second domain name identifier comprises the steps of
- obtaining the second domain name identifier as an input, and
- verifying whether the second domain name identifier is algorithmically derivable from the first domain name identifier according to one of a predetermined set of transformation algorithms.
So, instead of generating domain names, the method merely verifies whether given domain names ― e.g. entered manually ― conform to a predetermined set of format rules.

In a further preferred variant of the invention, the following steps are performed:
- determining at least one resource record holding communication information for use in accessing a target entity; and
- creating, in the DNS type database, for each of at least two of the domain names determined according to the preceding steps, an entry comprising said resource records.
This ensures that at least some, if not all communication services associated with the target entity are found, regardless of which domain name format is used in accessing the DNS type database.

In a further preferred variant of the invention, all the generated or successfully verified domain name identifiers comprise a common higher level domain name part (such as ".bluewin.ch.tel" or ".ch.tel"), in particular a common top level domain (such as ".tel"). This a allows an intially centralized redirection and authentication/certification service for various communication services to be established.

In yet a further preferred variant of the invention, said common top level domain is reserved exclusively for storing communication information, typically used for redirection. In particular, domain names not generateable or verifiable according to the invention are not allowed. This allows to keep the use of the corresponding name space reserved for looking up communication redirection information, improving control and maintainability of the name subspace. The term "communication information" in this context denotes information of the type contained in NAPTR resource records according to their current definition, that is, information specifying an endpoint for bi-directional communication such as e-mail, VoIP, ordinary telephones, fax. Therefore, e.g. explicit IP address information is not encompassed.

A further preferred variant of the invention comprises the step of
- associating, in the DNS type database, with at least one of the domain names determined, a resource record holding communication information for use in accessing a target entity, wherein the resource record comprises an algorithmically generated unique identifier corresponding to a target entity.

As a result, anonymized entries are stored in the DNS type database, rather than "real" names such as johndoe@funnycomp.com. This addresses the privacy issue raised in the introduction. The algorithmically generated unique identifier may also be called a "virtual identifier", emphasizing the fact that the identifier is anonymized, e.g. consisting of a sequence of numbers (or any characters) that does not provide information about the true identity of a person or organization associated with an endpoint or communication target.

A further preferred variant of the invention comprises the step of
- automatically generating a certificate associated with the user of the at least one communication service or endpoint, wherein said certificate expresses a trustworthiness of the user and is signed by the authority issuing the certificate.
This allows to establish a trusted chain of communication, in which the recipient of a communication of communication request may treat certified and uncertified communications differently. This helps to counter the abuse of communication systems through unsolicited communications such as spam.

The computer program for registering entries in a DNS (Domain Name System) type database, and the computer program for accessing a target entity over a communications network according to the invention each are loadable into an internal memory of a digital computer, and comprise respective computer program code means to make, when said computer program code means is loaded in the computer, the computer execute the method according to the invention. In a preferred embodiment of the invention, a computer program product comprises a computer readable medium, having the computer program code means recorded thereon.

The method for accessing a target entity over a communications network, comprises the steps of
- providing, to a DNS type database, a request comprising a domain name, and
- retrieving at least one of a set of resource records holding communication information for use in accessing a target entity,
wherein the domain name is one of at least two different domain names, of which one is algorithmically determined by the other or both are algorithmically determined from a common registration identifier, and wherein the at least one resource records retrieved are the same, regardless of which of the at least two domain names is provided to the DNS type database.

According to another aspect of the invention, a system for maintaining a redirection service for network communication based on the retrieval of communication information from a DNS type database is provided. In said system, a domain is reserved exclusively for the storage of communication information and associated resource records, and the name space of said domain comprises a plurality of sets of domain names, each set comprising at least two domain names, and wherein the domain names in one set are algorithmically derivable from each other or from a given registration identifier.

Further preferred variants are evident from the dependent patent claims.

### BRIEF DESCRIPTION OF THE DRAWINGS

The subject matter of the invention will be explained in more detail in the following text with reference to preferred exemplary embodiments which are illustrated in the attached drawings, in which:
- Figure 1: shows an interaction diagram representing a registration process according to the invention;
- Figure 2: shows an interaction diagram representing a process for accessing a target entity according to the invention.

### DETAILED DESCRIPTION OF PREFERRED EMBODIMENTS

In a preferred variant of the invention, in when registering entries in a DNS (Domain Name System) type database, the following steps are performed:
**1) providing a registration identifier,** said registration identifier 1 being a string of characters. In a preferred variant of the invention, the registration identifier 1 is a telephone number, in particular a telephone number as defined by the ITU E.164 standard. The registration identifier 1 may also be derived from such a telephone number, e.g. by stripping from it a preceding "+" character. For other number formats, other characters may have to be stripped or converted to numbers, as shown in one of the examples below. Other number formats are e.g. strings that comprise numbers only, or strings that comprise alphanumeric characters and characters from a limited set of special characters such as dash ("-"), underscore ("_"), etc.
   The registration identifier 1 is either provided by a user manually setting up a single set of domain names for a single registration identifier 1, or by an automated process that applies the inventive method repeatedly for an entire set of registration identifiers 1.
   For example, the registration identifier 1 is the string "12345". Here and throughout the applications, text in quotes denotes a string, the quotes not being part of the string. Alternatively, the registration identifier 1 is a phone number such as "+1234567890123456" or a domain name "12345.tel" or " 5.4.3.2.1.tel" or the like.
**2) automatically determining at least two domain name identifiers**, said domain name identifiers being character strings each comprising at least one substring that is algorithmically derived from at least a substring of the registration identifier. Said substrings that are part of the domain name identifiers may be the same or may be different for different domain name identifiers. Throughout the application, the term "substring" of a given string is understood to encompass the complete string as well.
   In the following paragraphs, exemplary methods for determining domain names from a given registration identifier 1, i.e. a given character string, are shown. As already stated, such a given character string may be e.g. a pure number, or a domain name generated or generateable according to one of the other methods. Applying two or more of the different methods or method alternatives results in the two or more domain names to be registered.
   For example, given a string of numbers, according to the ENUM standard, a domain name may be algorithmically derived by the following steps:
   1. Remove all non-digit characters except for the "+".
   2. Remove all characters with the exception of the digits. For example, the First rule produced the Key "+442079460148". This step would simply remove the leading "+", producing "442079460148".
   3. Put dots (". ") between each digit. Example: 4.4.2.0.7.9.4.6.0.1.4.8
   4. Reverse the order of the digits. Example: 8.4.1.0.6.4.9.7.0.2.4.4
   5. Append the string ".e164.arpa" to the end. Example: 8.4.1.0.6.4.9.7.0.2.4.4.e164.arpa
   As an alternative to step 5, another top-level domain name or a combination of top and lower level domain names may be used instead of ".e164.arpa".
   As a further example, given as registration identifier 1 a string of numbers alone or of alphanumeric characters, such as "1-800-JKL-1234.IPN", as described in application WO 00/74334, a domain name may be algorithmically derived by the following steps:
   1. Remove a prefix or postfix domain part, if there is one.
      Example: "1-800-JKL-1234".
   2. Substitute alphabetic characters by associated numbers.
      Example: "1-800-555-1234".
   3. Remove all non-numeric elements. Example: "18005551234".
   4. Putting dots between the digits, reversing their order and appending domain names results in a domain name having a similar structure as according to the ENUM standard.
   5. As an alternative to step 4, a predefined top-level domain name or a combination of top and lower level domain names are added to the number obtained in step 4.

   Furthermore, if e.g. a national numbering scheme associated with a number is known, the number may be segmented and dots inserted between the segments. The order of numbers within the segments may be reversed or not. Further examples of such segmentation methods are disclosed in WO 97/31490 which is herewith incorporated in its entirety by reference.
   In summary, when several of the above conversion schemes are applied, a set of several potential domain names results, for example:
   Registration Identifier: 12345
   - Domain 1:: 12345.tel
   - Domain 2:: 54321.tel
   - Domain 3:: 5.4.3.2.1.tel
   - Domain 4:: 12345.xyz.tel
   - Domain 5:: 5.4.3.2.1.xyz.tel
   - Domain 6:: 345.12.xyz.tel

   In a preferred variant of the invention, as shown in the above example, all the domains reside in the same top level domain, ".tel" in this case.
   As is implicit in the above description, the registration identifier 1 may be one of the domain names that is later registered, and a specific domain name may be derived directly from the registration identifier **1** or from another domain name that was generated previously.
   In another preferred variant of the invention instead of generating domain names, the inventive method verifies the validity of at least two given domain names entered manually or by an automated process. The method then checks whether each of said at least two domain name identifiers is derivable from a selected one of the domain name identifiers according to a respective of a predetermined set of transformation algorithms. The transformation algorithms correspond to the domain name generation methods shown above, or to inverse operations, where applicable.
   For example, a first domain name "54321.tel" and a second domain name "12345.xyz.tel" are given. The first domain name is stripped of the top level domain, the number order is reversed and the ".xyz.tel" is added. The resulting string is compared to the second domain name. In another variant of the invention, the given domain names are assumed to be in one of two predetermined, different formats. The format is preferably detected automatically when parsing the domain name. Each domain name, according to its format, is converted into an intermediate description such as e.g. a pure number string. If the two number string match, the respective domain names are consistent and the verification is considered to be successful.
**3) registering, in the DNS type database**, at least two of the domain names corresponding to the domain name identifiers generated from the registration identifier 1, or verified according to the previous steps.
   In a further preferred variant of the invention, the following steps are performed:
**4) determining at least one resource record** holding communication information for use in accessing a target entity or communication endpoint. For example, NAPTR (Naming Authority Pointers) resource records (RR)
   NAPTR 10 100 "u" "E2U+sip" "!^.*$!sip:info@example.com!"
   NAPTR 10 101 "u" "E2U+msg" "!^.*$!mailto:info@example.com!"
   are generated. The first of these records points to an internet telephone or VoIP endpoint, the second one to an e-mail endpoint. A definition of NAPTR resource records is found in RFC2915, RFC2916, RFC2916bis, RFC3761 and following documents.
**5) creating, in the DNS type database, for each of at least two of the domain names determined according to the preceding steps, an entry comprising said resource records**. For example, for each of the domains
   - Domain 1:: 12345.tel
   - Domain 2:: 54321.tel
   - Domain 3:: 5.4.3.2.1.tel
   the identical NAPTR resource record
   NAPTR 10 101 "u" "E2U+msg" "!^.*$!mailto:info@example.com!"
   is registered. Of course, other resource records in place of or in addition to NAPTR records can also be registered in all of said domains as well. As a result, regardless of which domain name is used, a pointer to the same endpoint/s is registered and shall be returned in any query, and in particular in an ENUM query of the DNS, of course depending on the type specified in the query.

This step is not necessarily executed after the generation and registration of all domain names, but may also be executed in parallel with the domain name registration, i.e. by automatically generating and registering a first domain name together with one or more associated resource records, then a second domain name with the same associated resource records, etc.

In yet a further preferred variant of the invention, the resource record comprises an algorithmically generated unique identifier corresponding to a target entity. The unique identifier is generated by a separate numbering scheme maintained by an organizational entity associated with the common top level domain mentioned above, or with e.g. a national entity associated with a second level domain.

Alternatively, the unique identifier is generated from at least a substring of the registration identifier or from at least a substring of one of the domain name identifiers, in a similar fashion as the domain names are generated. For example, for the registration identifier 1 "+1-770-555-1212" this may result in resource records such as
NAPTR 10 100 "u" "E2U+sip" "!^.*$!sip:user@17705551212.tel!"
NAPTR 10 102 "u" "E2U+msg" "!^.*$!mailto:user@17705551212.tel!"
associated with the different domain names. Again, other resource records than NAPTR records, but comprising a unique substring, may be generated and registered. Corresponding new resource records are currently undefined and shall have to be introduced by the appropriate standardization process.

In a further preferred variant of the invention, a domain or subdomain, i.e. its corresponding namespace, is reserved exclusively for domain names that are generated in this fashion, i.e. that are unique and typically algorithmically determined. As a result, all DNS entries associated with such domain names can be made to be anonymous, that is, they do not provide information about a true identity as would e.g. an e-mail address that comprises a persons last and first name and/or a company name.

In yet a further preferred variant of the invention the unique identifier comprises a selected domain name as determined by one of the previous steps. This allows the setting up of the different domain names with NAPTR and/or other resource records pointing to the selected domain. The selected domain then has further DNS resource records pointing to actual communication services, such as MX (mail exchange), A (host address), CNAME (canonical form for alias), etc., as listed e.g. in RFC1035 and later related documents.

As a result, a set of domain names with associated NAPTR and other resource records generated according to the invention is for example:

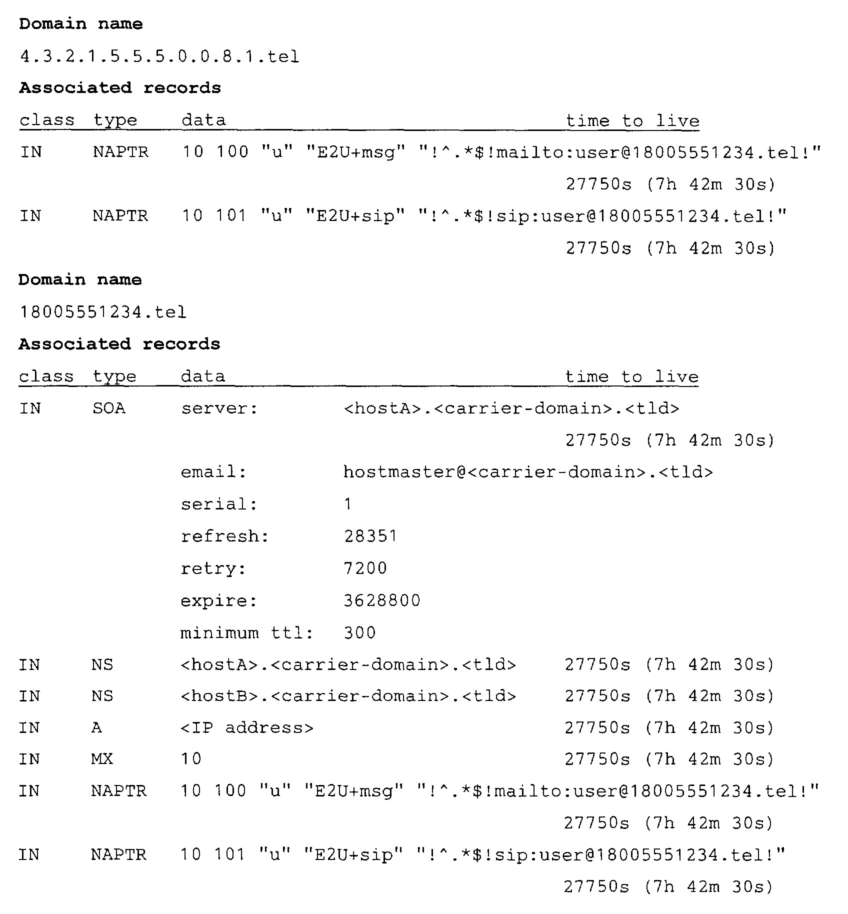

In the above example, the following placeholder strings are used:
- <host> :: a host computer name.
- <carrier-domain> :: a domain name corresponding to a carrier, such as a national telecom company.
- <tld> :: a top level domain name.

When the two domain names are structured as in the above example, i.e.
- one domain name comprising an inverted (with respect to a given phone number) and dot-separated string of numbers suffixed with a top level domain, and
- the other domain name comprising a non-inverted numeric string suffixed with a top level domain,
then registration process causes
- on the one hand a delegation of name resolution to distributed name servers, typically corresponding to a national authority, as proposed by the ENUM standard,
- and on the other hand a central name resolution by a set of top level name servers belonging to the same top level domain (corresponding, in the example, to the ".tel" domain) comprising an entry for, in the extreme case, each of the canonical unique (telephone) numbers. The entry record preferably refers to a domain maintained by a national carrier.

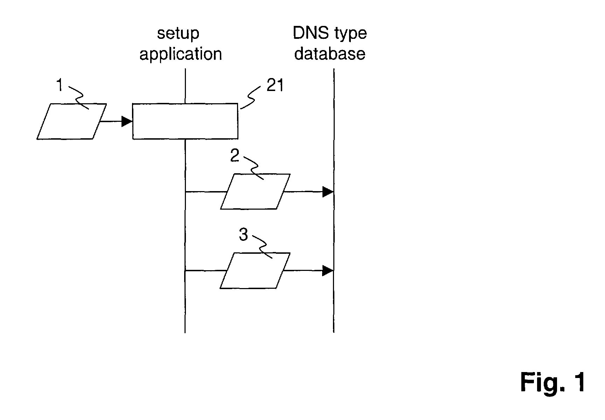

**Figure 1** shows an interaction diagram representing a registration process according to the invention. The registration identifier 1 is input to a registering or setup application by a human or by another program. A entry generating step 21 generates the domain names and NAPTR records as described above and sends them in the form of registration requests 2 and 3 (and optionally further requests not shown in the figure) to the DNS.

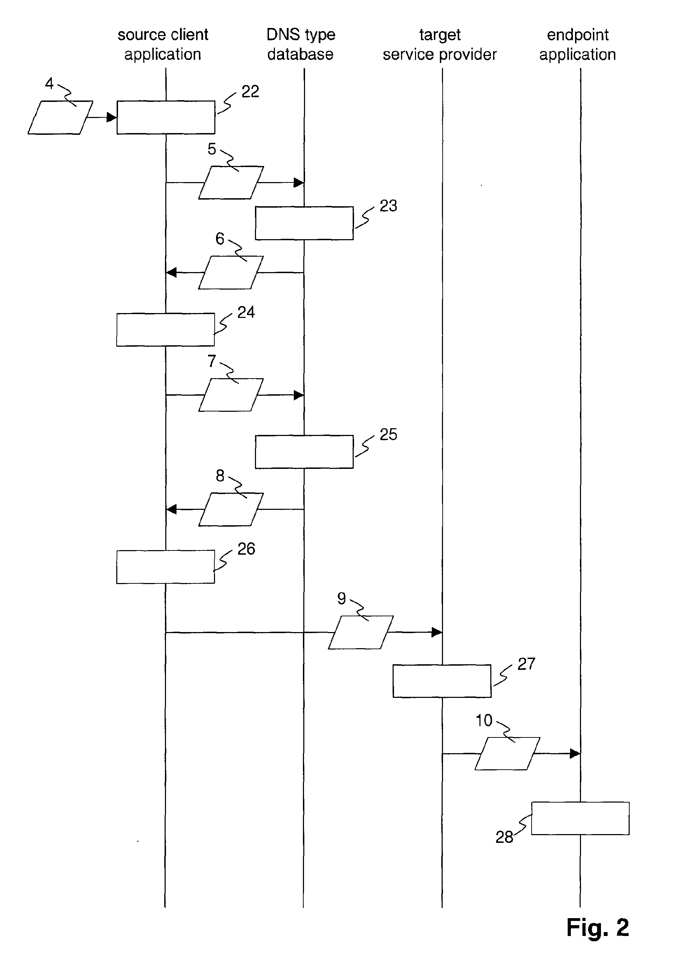

**Figure 2** shows an interaction diagram representing a process for accessing a target entity according to the invention. When accessing the target entity, a source entity or sending client having been given a phone number or domain name 4 first converts it, if required, in step 22 into a domain name according to one of the schemes shown above. The source client then accesses the DNS through a resource record request 5, which is processed as step 23 and returns resource records comprising the NAPTR records 6 for said given domain name. The NAPTR records 6 comprise addresses which in turn point to the selected domain. The sending client then in step 24 extracts the selected domain from the NAPTR records 6 and accesses the DNS by an ordinary request including the selected domain 7. This request is processed in step 25, returning the address 8 of the actual communication service. In processing this address 8 in step 26, the source client establishes communication with a target service provider, sending information 9. The target service provider, in step 27, processes said sent information and optionally forwards related information 10 to an endpoint application which processes it in step 28.

Further communication and processing takes place according to the nature of the information received by the target service provider and the endpoint application, and on the nature of the communication service.

For example, in e-mail communication, an e-mail is transmitted to an IP address returned by the DNS. In a voice application, a packed based communication link is established between the source client and an endpoint application.

In a further preferred variant of the invention, when setting up the domain names and pointers to communication services, at least part of the communication services are automatically installed or set up and initialized.

For example, when a national carrier company creates and registers, for each of a series of phone numbers, domain names and NAPTR resource records, then corresponding default standard e-mail accounts and/or default web pages are initialized as well.

In yet a further preferred variant of the invention, a certificate associated with the user of the at least one communication service or endpoint is generated automatically wherein said certificate expresses a trustworthiness of the user and is signed by the authority issuing the certificate

This approach helps to counter the flood of undesired e-mail, i.e. spam, by automatically checking the signature of incoming mails in servers of a carrier hosting e.g. individual endpoint user accounts. The following steps are performed:
- for each e-mail generated by a user associated with a certificate, in particular a user whose account and certificate have been set up automatically as described above, a signature certificate is generated automatically.
- every e-mail addressed to a client of the carrier has to carry a valid signature according to the carrier's requirements and/or user specific requirements, in order to be forwarded to the user.
- domain names generated by a carrier, where the carrier is a telephone company and the registration identifier 1 typically is a phone number, are automatically provided with a certificate with the usual attributes such as expiration, use, ... etc.
- external carriers, service providers or corporations can be incorporated into a chain or web of trust established by signing/certifying their signatures or certificates. This can happen for such entities as a whole, or limited to individual entities or customers associated with an entity.

The relations (chain or web) of trust are established by exchanging root certificates of all trusted sending servers. That is, a first provider A and a second provider B, or a first service Aa and second service Ab of provider A, are configured to automatically exchange root certificates and check signatures. For this purpose, the following steps have to be performed once per provider or service:
- importing the root certificate of the sending provider or service.
- define a certificate source of the sending server via e.g. a http keyserver or LDAP directory.
- define a rule regarding domains of the sending server.

While the invention has been described in present preferred variants of the invention, it is distinctly understood that the invention is not limited thereto, but may be otherwise variously embodied and practiced within the scope of the claims.

## Claims

1. A method for registering entries in a DNS (Domain Name System) type database, comprising the steps of
• providing a registration identifier (1), said registration identifier (1) being a string of characters;
• automatically determining a first domain name identifier, said first domain name identifier being a character string comprising at least a first substring that is algorithmically derived from at least a substring of the registration identifier (1);
• automatically determining a second domain name identifier, said second domain name identifier being a character string comprising at least a second substring that is algorithmically derivable from at least a substring of the registration identifier (1) or from at least a substring of the first domain name identifier; and
• registering, in the DNS type database, domain names according to the first domain name identifier and to the second domain name identifier.

2. The method of claim 1, comprising the step of
• automatically determining and registering further domain name identifiers, said further domain name identifiers being character strings, each of which comprises at least a respective substring that is algorithmically, according to a respective algorithm, derived from at least a substring of the registration identifier (1) or from at least a substring of another domain name identifier.

3. The method of one of claims 1 or 2, wherein in one of the steps of algorithmically deriving one substring from another, the algorithmic derivation results in an identical substring.

4. The method of claim 3, wherein the registration identifier (1) is a domain name, the step of automatically determining the first domain name identifier comprises considering the first domain name identifier to be identical to the registration identifier (1), and the step of automatically determining the second domain name identifier comprises the steps of
• obtaining the second domain name identifier as an input, and
• verifying whether the second domain name identifier is algorithmically derivable from the first domain name identifier according to one of a predetermined set of transformation algorithms.

5. The method of one of the preceding claims, comprising the step of
• determining at least one resource record holding communication information for use in accessing a target entity; and
• creating, in the DNS type database, for each of at least two of the domain names determined according to the preceding steps, an entry comprising said resource records.

6. The method of one of the preceding claims, wherein the registration identifier (1) is derived from a telephone number.

7. The method of one of the preceding claims, wherein all the domain name identifiers comprise a common domain name, in particular a common top level domain.

8. The method of claim 7, wherein said common top level domain or common lower level domain is reserved exclusively for storing communication information and associated resource records and excludes domain names that do not conform to the generation or verification method according to one of the preceding claims.

9. The method of one of the preceding claims, comprising the step of
• associating, in the DNS type database, with at least one of the domain names determined, a resource record holding communication information for use in accessing a target entity, wherein the resource record comprises an algorithmically generated unique identifier corresponding to a target entity.

10. The method of claim 9, comprising the step of
• generating the unique identifier from at least a substring of the registration identifier (1) or from at least a substring of one of the domain name identifiers.

11. The method of claim 10 comprising the step of
• associating, in the DNS type database, with at least one of the domain names determined, a resource record holding communication information for use in accessing a target entity and comprising one of the other domain names determined.

12. The method of one of the claims 5 to 11, comprising the step of
• automatically setting up at least one communication service as defined by the at least one resource record.

13. The method of claim 12, comprising the step of
• automatically generating a certificate associated with at least one of a domain name or carrier or user of the at least one communication service or endpoint, wherein said certificate expresses a trustworthiness of the user and is signed by the authority issuing the certificate.

14. A computer program comprising computer program code means loadable into an internal memory of a digital computer, and configured to make the computer execute the method according to at least one of the claims 1 to 13.

15. A data storage means comprising the computer program according to claim 14.

16. A method for accessing a target entity over a communications network, comprising the steps of
• providing, to a DNS (Domain Name System) type database, a request comprising a domain name, and
• retrieving at least one of a set of resource records holding communication information for use in accessing a target entity,
wherein the domain name is one of at least two different domain names, of which one is algorithmically determinable from the other or both are algorithmically determinable from a common registration identifier (1), and wherein the at least one resource records retrieved are the same, regardless of which of the at least two domain names is provided to the DNS type database.

17. The method of claim 16, comprising the step of
• retrieving, from the DNS type database, a resource record that comprises, as part of said communication information, an algorithmically generateable unique identifier corresponding to said target entity.

18. The method of claim 17, comprising the step of
• a source entity accessing said target entity according to a communication methodology specified by said resource record, said source entity providing a certificate that establishes a trustworthiness of the source entity with respect to the target entity; and
• an intermediate verification entity checking the certificate of the source entity and the access to the target entity being controlled depending on the outcome of this check.

19. A computer program comprising computer program code means loadable into an internal memory of a digital computer, and configured to make the computer execute the method according to at least one of the claims 16 to 18.

20. A data storage means comprising the computer program according to claim 19.

21. A system for maintaining a redirection service for network communication based on the retrieval of communication information from a DNS type database, in which a domain is reserved exclusively for the storage of communication information and associated resource records, and the name space of said domain comprises a plurality of sets of domain names, each set comprising at least two domain names, and wherein the domain names in one set are algorithmically derivable from each other or from a given registration identifier (1) .

22. The system of claim 21, wherein said reserved domain is a top level domain.
